# EUROPEAN PATENT APPLICATION

(11) **EP 4 741 683 A1**
(43) Date of publication of application: **13.05.2026**
(21) Application number: 25214150.2
(22) Date of filing: 07.11.2025
(51) Int. Cl.: F16H 48/22

(54) **VEHICLE DIFFERENTIAL DEVICE AND VEHICLE**

(30) Priority: 12.11.2024 JP 2024197655
(71) Applicant: MAZDA MOTOR CORPORATION, Hiroshima 730-8670 (JP)
(72) Inventor: Oka, Nobuyuki, Aki-gun, Hiroshima, 730-8670 (JP); Ohkawa, Yuzo, Aki-gun, Hiroshima, 730-8670 (JP)
(74) Representative: Lorenz Seidler Gossel Part. mbB

(57) **Abstract**

A vehicle differential device capable of adjusting a differential limiting force with a simple configuration is provided. It includes: a differential case 40 rotated by receiving driving force of a rear drive motor 21; a pair of side gears 60 coaxial with a rotation axis O of the differential case; a pinion gear 52 meshing with both of the pair of side gears; and a differential limiting mechanism 70 that generates differential limiting force F for limiting differential motion of rear wheels 3 of a vehicle 1. The differential limiting mechanism has a plurality of friction plates 80 pressed by each side gear in an axial direction X.

## Description

### [Technical Field]

The present disclosure relates to a vehicle differential device and a vehicle.

### [Background Art]

Vehicle differential devices having differential limiting mechanisms are known. For example, a vehicle differential device disclosed in Patent Literature 1 includes: a differential case that is driven to rotate by a driving force of an engine; a differential gear mechanism that distributes the rotation of the differential case to wheel sides through a pair of side gears; a cone clutch that is formed between the differential case and a clutch member, is fastened by receiving a meshing reaction force of the side gear, and limits differential motion of the differential gear mechanism; and a cam mechanism that is provided between the clutch member and the side gear and presses the cone clutch by receiving the driving force.

### [Citation List]

### [Patent Literature]

[Patent Literature 1] Japanese Unexamined Patent Publication No. H09-49560

### [Summary of Invention]

### [Problems to be Solved by the Invention]

When a differential limiting force of the differential limiting mechanism is large, the stability of a vehicle while traveling in a straight line is improved, but it is difficult for the vehicle to turn. When the differential limiting force of the differential limiting mechanism is small, it is easy for the vehicle to turn, but the stability of the vehicle while traveling in a straight line lowers. In order to balance the stability of the vehicle while traveling in a straight line and the ease of turning the vehicle, it is desired to adjust the differential limiting force of the differential limiting mechanism in the vehicle differential device.

The object of the present disclosure is to provide a vehicle differential device capable of adjusting the differential limiting force with a simple configuration.

### [Means for Solving the Problems]

A vehicle differential device according to the present embodiment is to be mounted on a vehicle, and includes: a differential case that is rotated by receiving a driving force of a drive source; a pair of side gears that are disposed in the differential case and coaxial with a rotation axis of the differential case; a pinion gear that is disposed in the differential case and meshes with both of the pair of side gears; and a differential limiting mechanism that generates a differential limiting force for limiting differential motion of wheels of the vehicle, wherein the differential limiting mechanism has a plurality of friction plates that are pressed by each of the side gears in an axial direction in which the rotation axis extends, some of the plurality of friction plates are a plurality of case-side friction plates provided in the differential case, others of the plurality of friction plates are a plurality of gear-side friction plates provided in the side gear, the case-side friction plates and the gear-side friction plates are arranged side by side in the axial direction and slide relative to each other to generate the differential limiting force, and in the differential limiting mechanism, a friction-plates-adjacent portion is formed in which among at least either type of the case-side friction plates and the gear-side friction plates, two or more of the friction plates of same type are adjacent to each other.

When the friction-plates-adjacent portion is increased in number or when the number of the friction plates of same type that constitute the friction-plates-adjacent portion is increased, the number of sliding surfaces between the case-side friction plates and the gear-side friction plates is decreased, and consequently the differential limiting force becomes smaller. When the friction-plates-adjacent portion is decreased in number or when the number of the friction plates of same type that constitute the friction-plates-adjacent portion is decreased, the number of sliding surfaces between the case-side friction plates and the gear-side friction plates is increased, and consequently the differential limiting force becomes larger.

Thus, by adjusting the number of friction-plates-adjacent portions or the number of the friction plates of same type that constitute the friction-plates-adjacent portion, the differential limiting force for limiting the differential motion of the wheels of the vehicle can be adjusted.

As described above, it is possible to provide a vehicle differential device capable of adjusting the differential limiting force with a simple configuration.

In one embodiment, the friction-plates-adjacent portion includes a case-side friction-plates-adjacent portion in which two or more of the case-side friction plates are adjacent to each other.

The case-side friction-plates-adjacent portion as the friction-plates-adjacent portion can be easily formed by arranging a plurality of case-side friction plates adjacent to each other.

In one embodiment, the friction-plates-adjacent portion includes a gear-side friction-plates-adjacent portion in which two or more of the gear-side friction plates are adjacent to each other.

The gear-side friction-plates-adjacent portion as the friction-plates-adjacent portion can be easily formed by arranging a plurality of gear-side friction plates adjacent to each other.

In one embodiment, except for the friction-plates-adjacent portion, the case-side friction plates and the gear-side friction plates are alternately arranged in axial direction.

This arrangement allows the case-side friction plates and the gear-side friction plates to slide relative to each other to generate the differential limiting force.

In one embodiment, among the plurality of friction plates, one specific friction plate has a greater thickness than the other friction plates and is in contact with the gear main body and with a disc spring.

This configuration allows the specific friction plate to transmit the spring force effectively.

In one embodiment, the disc spring is disposed between the pressing body and the gear main body of the side gear and presses the friction plates in the axial direction.

This arrangement enables the disc spring to press the friction plates reliably in the axial direction.

In one embodiment, each of the side gears has a gear main body that meshes with the pinion gear and a pressing body that holds, together with the gear main body, the plurality of friction plates therebetween. The gear main body and the pressing body are engaged with each other, and the gear-side friction plates are mounted to the pressing body.

The plurality of friction plates are easily pressed by the gear main body and the pressing body.

In one embodiment, the differential limiting mechanism includes a first differential limiting mechanism provided on one side of the pinion gear in the axial direction, and a second differential limiting mechanism provided on another side of the pinion gear in the axial direction, and the friction-plates-adjacent portion is formed in both of the first differential limiting mechanism and the second differential limiting mechanism.

It is possible to adjust the differential limiting force for each of the left and right wheels.

In one embodiment, the differential limiting mechanism includes the first differential limiting mechanism provided on one side of the pinion gear in the axial direction, and the second differential limiting mechanism provided on the other side of the pinion gear in the axial direction, and the number of sliding surfaces between the case-side friction plates and the gear-side friction plates in the first differential limiting mechanism and the number of sliding surfaces between the case-side friction plates and the gear-side friction plates in the second differential limiting mechanism are different from each other.

The differential limiting force for the right wheel and the differential limiting force for the left wheel can be different from each other.

In one embodiment, the differential limiting mechanism may be provided in a rear differential device and/or a front differential device.

In one embodiment, the vehicle is of a rear-wheel drive type or an all-wheel drive type, and the vehicle differential device is used for differential control of rear wheels of the vehicle.

The stability of the vehicle while traveling in a straight line can be improved by adjusting the differential limiting force for the rear wheels.

A vehicle according to the present disclosure includes: a front drive unit that rotates front wheels; and a rear drive unit that rotates rear wheels independently of the front drive unit, and has the vehicle differential device.

It is possible to provide a vehicle with improved stability while traveling in a straight line by adjusting the differential limiting force for the rear wheels.

In one embodiment, the vehicle is an electric vehicle.

### [Advantageous Effect of Invention]

According to the present disclosure, it is possible to provide a vehicle differential device capable of adjusting the differential limiting force with a simple configuration.

### [Brief Description of Drawings]

FIG. 1 is a schematic diagram of a vehicle according to a first embodiment.
FIG. 2 is a cross-sectional view of a rear differential device according to the first embodiment as viewed in a front-rear direction.
FIG. 3 shows friction plates of a differential limiting mechanism according to the first embodiment in an enlarged cross-sectional view of region III.
FIG. 4 shows a case-side friction plate according to the first embodiment as viewed in the direction indicated by arrows IV.
FIG. 5 shows a gear-side friction plate according to the first embodiment as viewed in the direction indicated by arrows V.
FIG. 6 is a conceptual diagram of the friction-plates-adjacent portions according to the first embodiment.
FIG. 7 is a conceptual diagram of the friction-plates-adjacent portions according to a second embodiment.
FIG. 8 shows a rear differential device according to a third embodiment.

### [Mode for Carrying Out the Invention]

Some embodiments of the present disclosure will be explained below in detail based on the drawings. The following descriptions of preferred embodiments are merely exemplary in nature, and are not intended to limit the present disclosure, objects to which the present disclosure is applied, or the applications in any manner.

In the following explanations, front, rear, left, right, up, and down are based on the view from an occupant riding in a vehicle 1.

### <First Embodiment>

The first embodiment will be explained.

### (Vehicle)

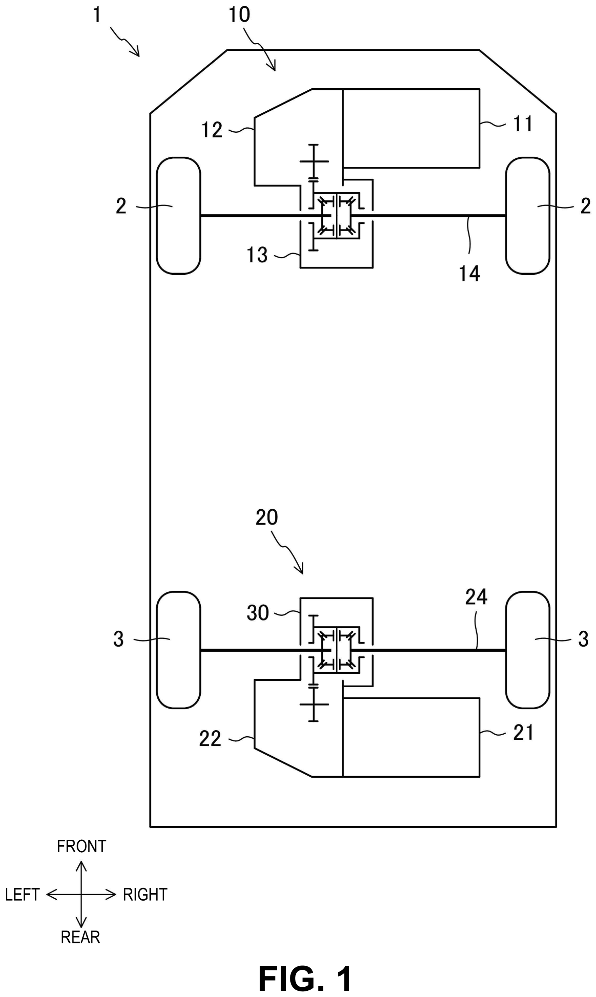

FIG. 1 shows the vehicle 1 in a schematic diagram. In this example, the vehicle 1 is an electric automobile. As shown in FIG. 1, the vehicle 1 includes front wheels 2, rear wheels 3, a front drive unit 10, and a rear drive unit 20. The vehicle 1 is of an all-wheel drive type, in which both the front wheels 2 and the rear wheels 3 are driven to rotate. The vehicle 1 is capable of rotating the front wheels 2 and the rear wheels 3 independently of each other.

The front drive unit 10 is disposed in a front portion of the vehicle 1. The rear drive unit 20 is disposed in a rear portion of the vehicle 1. The front drive unit 10 rotates the front wheels 2, independently of the rear drive unit 20. The rear drive unit 20 rotates the rear wheels 3, independently of the front drive unit 10. The vehicle 1 is not equipped with a shaft (for example, a propeller shaft) for transmitting a driving force in the front-rear direction.

The front drive unit 10 has a front drive motor 11, a front speed reducer 12, and a front differential device 13. The front drive motor 11 is a drive source for rotating the front wheels 2. The rotation of the front drive motor 11 is decelerated by the front speed reducer 12 and then transmitted to the front differential device 13. The front differential device 13 is connected to the left and right front wheels 2 through a front drive shaft 14. The front differential device 13 differentially rotates the left and right front wheels 2, according to the travel state of the vehicle 1.

The rear drive unit 20 has a rear drive motor 21, a rear speed reducer 22, and a rear differential device 30. The arrangement of the rear drive unit 20 is symmetrical to the arrangement of the front drive unit 10 in the front-rear direction. The rear drive motor 21 is a drive source for rotating the rear wheels 3. The rear drive motor 21 is an example of the drive source. The rotation of the rear drive motor 21 is decelerated by the rear speed reducer 22 and then transmitted to the rear differential device 30. The rear differential device 30 is an example of a vehicle differential device. The rear differential device 30 is connected to the left and right rear wheels 3 through a rear drive shaft 24. The rear differential device 30 differentially rotates the left and right rear wheels 3, according to the travel state of the vehicle 1. The rear wheels 3 are an example of wheels.

In the present embodiment, the rear differential device 30 is specifically designed, and so the rear differential device 30 will be described in detail below.

### (Rear Differential Device)

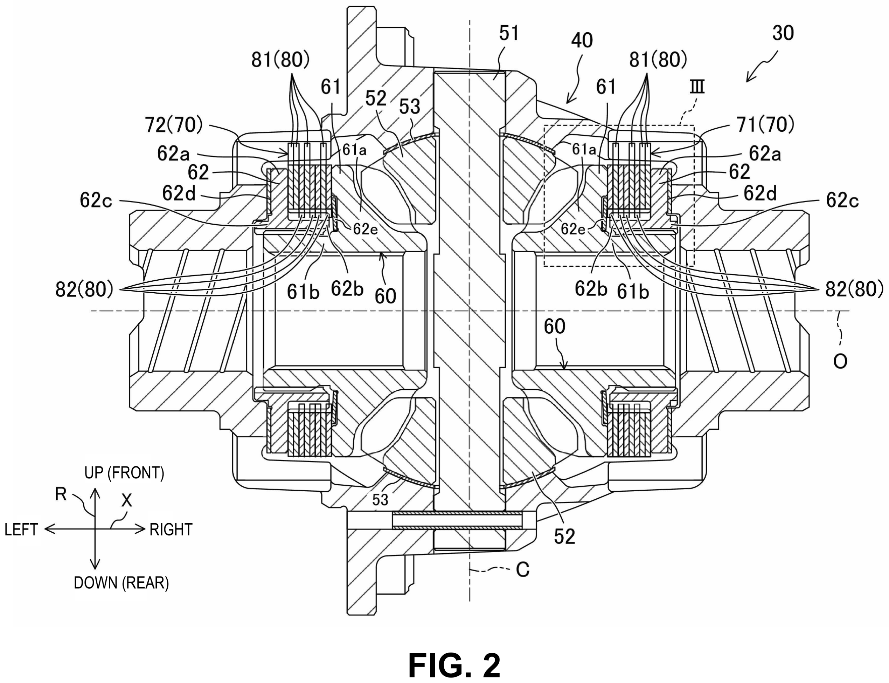

FIG. 2 is a cross-sectional view of the rear differential device 30 as viewed in the front-rear direction. The rear differential device 30 is used for differential control of the left and right rear wheels 3 (wheels) of the vehicle 1. As shown in FIG. 2, the rear differential device 30 is mounted in the rear portion of the vehicle 1. The rear differential device 30 includes a differential case 40, a pinion shaft 51, a pair of pinion gears 52, a pair of side gears 60, and a differential limiting mechanism 70.

The differential case 40 is rotated by receiving the driving force of the rear drive motor 21, which is the drive source. The driving force of the rear drive motor 21 is transmitted to the differential case 40 of the rear differential device 30 through the rear speed reducer 22. The differential case 40 receives the driving force from the rear speed reducer 22 through a final driven gear (not shown) and is rotated around a rotation axis O. The rotation axis O extends in the vehicle width direction (left-right direction).

In the following explanations, an axial direction X means the direction in which the rotation axis O extends. The axial direction X is the vehicle width direction (left-right direction). A central axis C side in the axial direction X, which will be described later, is referred to as the inner side in the axial direction X. The opposite side from the central axis C in the axial direction X is referred to as the outer side in the axial direction X. A radial direction R means a direction orthogonal to the rotation axis O. The radial direction R includes the updown direction and the front-rear direction. A rotation axis O side in the radial direction R is referred to as the inner side in the radial direction R. The opposite side of the rotation axis O in the radial direction R is referred to as the outer side in the radial direction R.

The pinion shaft 51 is fixed inside the differential case 40. The central axis C of the pinion shaft 51 extends in the radial direction R orthogonal to the rotation axis O. The central axis C of the pinion shaft 51 extends in the radial direction R across the rotation axis O. The rotation axis O passes through a central portion in the longitudinal direction of the pinion shaft 51. When the differential case 40 rotates around the rotation axis O, the pinion shaft 51 rotates around the rotation axis O together with the differential case 40. The pinion shaft 51 rotates around the rotation axis O with the central portion in the longitudinal direction as the center. Both end portions of the pinion shaft 51 in the longitudinal direction turn around the rotation axis O.

A pair of (two) pinion gears 52 are disposed in the differential case 40. The pinion gears 52 are attached to both end portions of the pinion shaft 51 in the longitudinal direction (radial direction R). One of the pinion gears 52 is attached to one end portion of the pinion shaft 51. The other pinion gear 52 is attached to the other end portion of the pinion shaft 51. The one pinion gear 52 and the other pinion gear 52 are disposed on opposite sides in the radial direction R across the rotation axis O.

The pinion gears 52 are rotatable relative to the pinion shaft 51 and around the central axis C of the pinion shaft 51. When the differential case 40 rotates around the rotation axis O, the pinion gears 52 rotate around the rotation axis O together with the pinion shaft 51. The turning radius of the one pinion gear 52 with respect to the rotation axis O and the turning radius of the other pinion gear 52 with respect to the rotation axis O are equal to each other.

The pinion gears 52 mesh with both of a pair of side gears 60, which will be described later. A washer 53 is disposed between each pinion gear 52 and the differential case 40 in the radial direction R.

The pair of (two) side gears 60 are disposed in the differential case 40. Each side gear 60 has a substantially cylindrical shape. A cylinder axis of the side gear 60 is coaxial with the rotation axis O of the differential case 40. The side gears 60 are disposed outward of the pinion gears 52 in the axial direction X. One side gear 60 and the other side gear 60 are disposed in mirror symmetry with respect to a plane that passes through the central axis C and is orthogonal to the rotation axis O.

The pair of side gears 60 mesh with the pinion gears 52. The pinion gears 52 mesh with both of the pair of side gears 60.

The side gears 60 are not fixed to the differential case 40. The side gears 60 are rotatable relative to the differential case 40 and around the rotation axis O.

Each side gear 60 has a gear main body 61 and a pressing body 62. The gear main body 61 includes a gear part 61a and a cylindrical part 61b. The gear main body 61 and the gear part 61a of the side gear 60 mesh with the pinion gears 52. The cylindrical part 61b extends from an inner portion in the radial direction R of the gear part 61a toward the opposite side from the pinion gear 52 in the axial direction X (outward in the axial direction X).

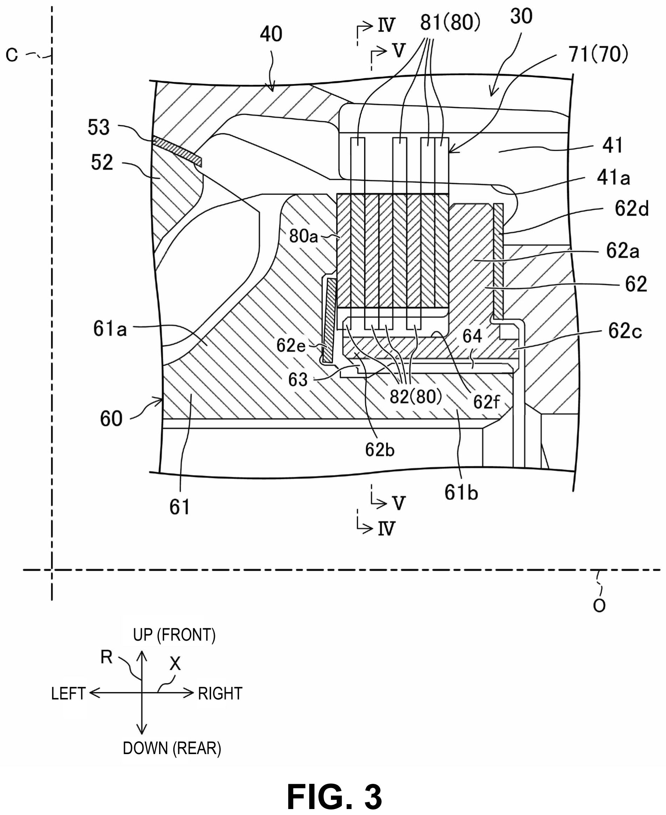

The rear drive shaft 24 (see FIG. 1) is fastened to an inner circumferential surface of the gear part 61a and an inner circumferential surface of the cylindrical part 61b. An inner spline 64 (for example, a helical spline) is formed on an outer circumferential surface of the cylindrical part 61b (see FIG. 3).

The pressing body 62 is disposed outward of the gear part 61a of the gear main body 61 in the axial direction X. The pressing body 62 is disposed outward of the cylindrical part 61b of the gear main body 61 in the radial direction R. The pressing body 62 and the gear part 61a of the gear main body 61 are disposed on opposite sides in the axial direction X with a plurality of friction plates 80 of the differential limiting mechanism 70 (described later) interposed therebetween.

The pressing body 62 has a substantially cylindrical shape. A cylinder axis of the pressing body 62 is coaxial with the rotation axis O of the differential case 40. The pressing body 62 includes a pressing part 62a, an inner cylindrical part 62b, and an outer cylindrical part 62c. The pressing part 62a of the pressing body 62 and the gear part 61a of the gear main body 61 hold the plurality of friction plates 80 therebetween in the axial direction X. The plurality of friction plates 80 are pressed in the axial direction X by the pressing part 62a of the pressing body 62 and the gear part 61a of the gear main body 61. The pressing part 62a is in the shape of a disc with a hole in the center. The pressing part 62a is in contact with the friction plate 80 positioned outermost in the axial direction X. In the gear part 61a of the gear main body 61, an outer portion in the radial direction R in an outer end surface in the axial direction X is in contact with the friction plate 80 positioned innermost in the axial direction X. A spacer 62d is disposed between the outer surface of the pressing part 62a in the axial direction X and the differential case 40.

The inner cylindrical part 62b extends from an inner portion in the radial direction R of the pressing part 62a toward the inner side in the axial direction X. A disc spring 62e is disposed between an inner end of the inner cylindrical part 62b in the axial direction X and a recess in the inner portion in the radial direction R of the outer end surface of the gear part 61a of the gear main body 61 in the axial direction X.

The outer cylindrical part 62c extends from an inner portion in the radial direction R of the pressing part 62a toward the outer side in the axial direction X. The outer cylindrical part 62c is accommodated in a recess formed in the differential case 40.

An outer spline 63 (for example, a helical spline) is formed on an inner circumferential surface of the pressing body 62 (see FIG. 3). As described above, the inner spline 64 (for example, a helical spline) is formed on the outer circumferential surface of the cylindrical part 61b of the gear main body 61.

The gear main body 61 and the pressing body 62 are engaged with each other. More specifically, the inner spline 64 on the outer circumferential surface of the cylindrical part 61b of the gear main body 61 and the outer spline 63 on the inner circumferential surface of the pressing body 62 are spline-fitted to each other. The rotation of the pressing body 62 around the rotation axis O is restricted with respect to the gear main body 61. The pressing body 62 is allowed to move relative to the gear main body 61 in the axial direction X.

### (Friction Plates of Differential Limiting Mechanism)

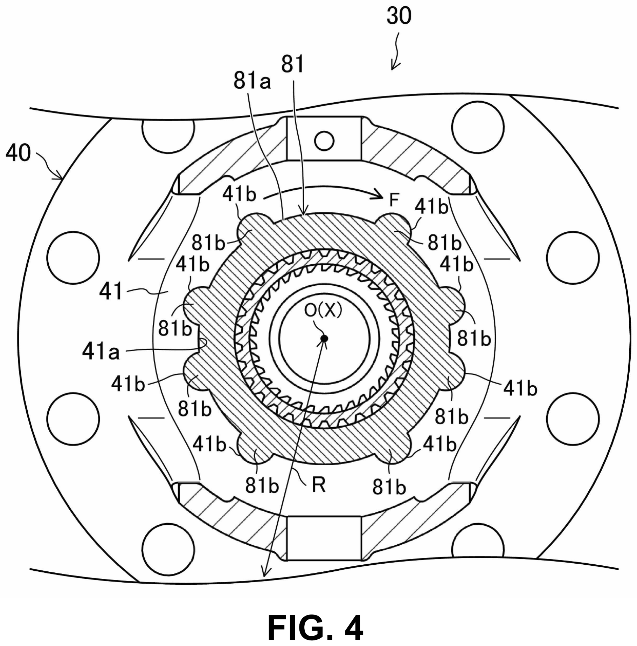

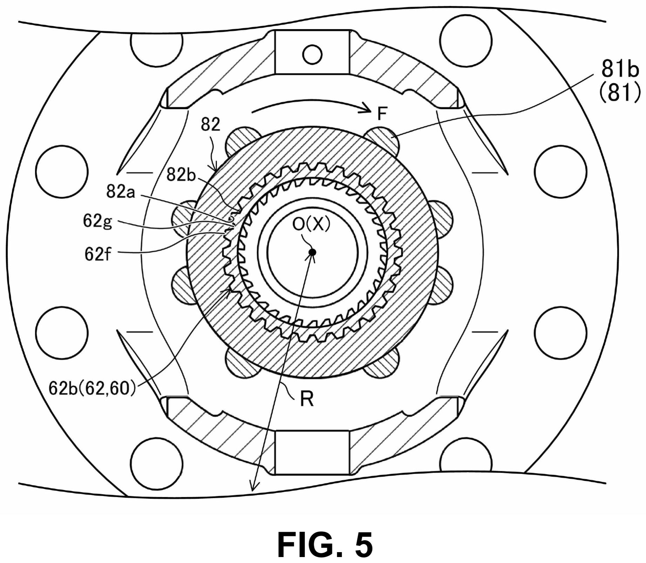

FIG. 3 shows the friction plates 80 of the differential limiting mechanism 70 in an enlarged cross-sectional view of region III. FIG. 4 shows a case-side friction plate 81 described later as viewed in the direction indicated by arrows IV. FIG. 5 shows a gear-side friction plate 82 described later as viewed in the direction indicated by arrows V.

As shown in FIG. 3, the differential limiting mechanism 70 generates a differential limiting force F for limiting differential motion between the left and right rear wheels 3 (wheels) of the vehicle 1. The differential limiting mechanism 70 has a plurality of friction plates 80. Each friction plate 80 is in the form of a plate with a thickness direction being in the axial direction X. The friction plate 80 has a ring shape with a hole in the center when viewed in the axial direction X. The axis of the friction plate 80 is coaxial with the rotation axis O of the differential case 40. The plurality of friction plates 80 are arranged side by side in the axial direction X.

The plurality of friction plates 80 are pressed in the axial direction X by the side gear 60. The plurality of friction plates 80 are disposed between the gear part 61a of the gear main body 61 and the pressing part 62a of the pressing body 62 in the axial direction X. The plurality of friction plates 80 are held between the gear part 61a of the gear main body 61 and the pressing part 62a of the pressing body 62 in the axial direction X, and pressed in the axial direction X.

Some of the plurality of friction plates 80 are a plurality of case-side friction plates 81. The other (rest) of the plurality of friction plates 80 are a plurality of gear-side friction plates 82.

As shown in FIG. 3 and FIG. 4, the case-side friction plates 81 are mounted in the differential case 40. A cylindrical wall 41 in the shape of a cylinder is formed in the differential case 40. The cylindrical wall 41 has a circular shape when viewed in the axial direction X. The cylindrical wall 41 extends in the axial direction X. An inner circumferential surface 41a of the cylindrical wall 41 is provided with a plurality of grooves 41b recessed outward in the radial direction R. The grooves 41b extend in the axial direction X. The plurality of grooves 41b are arranged side by side around the rotation axis O.

An outer circumferential surface 81a of each case-side friction plate 81 is provided with a plurality of protrusions 81b protruding outward in the radial direction R. The outer circumferential surface 81a of the case-side friction plate 81 faces the inner circumferential surface 41a of the cylindrical wall 41. The protrusions 81b of the case-side friction plate 81 are fitted in the grooves 41b of the cylindrical wall 41.

The rotation of the case-side friction plates 81 around the rotation axis O is restricted with respect to the cylindrical wall 41 of the differential case 40. The case-side friction plates 81 are allowed to move relative to the cylindrical wall 41 of the differential case 40 in the axial direction X.

As shown in FIG. 3 and FIG. 5, the gear-side friction plates 82 are mounted in the side gear 60. Specifically, each gear-side friction plate 82 is mounted to the pressing body 62 of the side gear 60. An outer circumferential surface 62f of the inner cylindrical part 62b of the pressing body 62 of the side gear 60 is provided with a plurality of grooves 62g recessed inward in the radial direction R. The grooves 62g extend in the axial direction X. The plurality of grooves 62g are arranged side by side around the rotation axis O.

An inner circumferential surface 82a of each gear-side friction plate 82 is provided with a plurality of protrusions 82b protruding inward in the radial direction R. The inner circumferential surface 82a of the gear-side friction plate 82 faces the outer circumferential surface 62f of the inner cylindrical part 62b of the pressing body 62. The protrusions 82b of the gear-side friction plate 82 are fitted in the grooves 62g of the inner cylindrical part 62b of the pressing body 62.

The rotation of the gear-side friction plates 82 around the rotation axis O is restricted with respect to the pressing body 62 of the side gear 60. The gear-side friction plates 82 are allowed to move relative to the pressing body 62 of the side gear 60 in the axial direction X.

An inner diameter of the case-side friction plate 81 is smaller than an outer diameter of the gear-side friction plate 82. The outer diameter of the gear-side friction plate 82 is larger than the inner diameter of the case-side friction plate 81. An inner portion of the case-side friction plate 81 in the radial direction R and an outer portion of the gear-side friction plate 82 in the radial direction R slide relative to each other around the rotation axis O. Note that the outer diameter of the case-side friction plate 81 and the outer diameter of the gear-side friction plate 82 may be equal to each other, and the inner diameter of the case-side friction plate 81 and the inner diameter of the gear-side friction plate 82 may be equal to each other.

As shown in FIG. 3, among the friction plates 80, a specific friction plate 80a (one gear-side friction plate 82 in this example) positioned innermost in the axial direction X has a greater thickness compared to the other friction plates 80. The specific friction plate 80a is in contact with the gear part 61a of the gear main body 61 and the disc spring 62e. The plurality of friction plates 80 other than the specific friction plate 80a have an equal thickness.

The case-side friction plates 81 and the gear-side friction plates 82 are arranged side by side in the axial direction X. Except for friction-plates-adjacent portions 90 described later, the case-side friction plates 81 and the gear-side friction plates 82 are disposed alternately side by side in the axial direction X. The case-side friction plates 81 and the gear-side friction plates 82 slide relative to each other around the rotation axis O to generate the differential limiting force F (see FIGS. 4 and 5).

The differential limiting force F acts in a tangential direction with respect to the rotation axis O. The differential limiting force F is calculated by multiplying a friction force acting on sliding surfaces between the case-side friction plates 81 and the gear-side friction plates 82 by the number of the sliding surfaces. Note that a differential limiting torque is calculated by multiplying the differential limiting force F by the sliding diameter between the case-side friction plate 81 and the gear-side friction plate 82.

Returning to FIG. 2, the differential limiting mechanism 70 includes a first differential limiting mechanism 71 and a second differential limiting mechanism 72. The first differential limiting mechanism 71 corresponds to the right rear wheel 3 (wheel). The second differential limiting mechanism 72 corresponds to the left rear wheel 3 (wheel). The first differential limiting mechanism 71 is arranged on one side (the right side in FIG. 2) of the pinion gears 52 in the axial direction X. The second differential limiting mechanism 72 is arranged on the other side (the left side in FIG. 2) of the pinion gears 52 in the axial direction X.

In this example, the first differential limiting mechanism 71 and the second differential limiting mechanism 72 are disposed in mirror symmetry about a plane that passes through the central axis C and is orthogonal to the rotation axis O. In this example, the number of case-side friction plates 81, the number of gear-side friction plates 82, the presence or absence (or the number) of the friction-plates-adjacent portions 90 described later and the like are the same between the first differential limiting mechanism 71 and the second differential limiting mechanism 72.

### (Friction-Plates-Adjacent Portion)

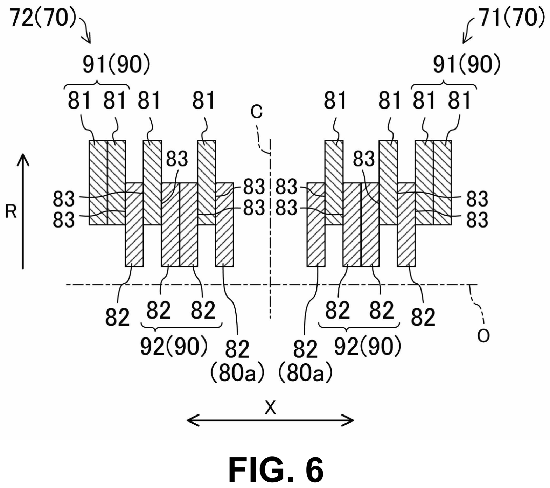

FIG. 6 shows a conceptual diagram of the friction-plates-adjacent portions 90. Note that, for ease of understanding, the thickness of the specific friction plate 80a is made equal to the thickness of the other friction plates 80. Moreover, for ease of understanding, the inner diameter and the outer diameter of the case-side friction plates 81 are illustrated larger, and the inner diameter and the outer diameter of the gear-side friction plates 82 are illustrated smaller compared to FIG. 3. As shown in FIG. 6, the friction-plates-adjacent portions 90 are formed in the differential limiting mechanism 70. In each friction-plates-adjacent portion 90, among at least either type of the case-side friction plates 81 and the gear-side friction plates 82, two or more of the friction plates 80 of same type are adjacent to each other in the axial direction X.

In this example, there are eight friction plates 80 (including the specific friction plate 80a). There are four case-side friction plates 81 and four gear-side friction plates 82. In this example, the friction-plates-adjacent portions 90 include a case-side friction-plates-adjacent portion 91 and a gear-side friction-plates-adjacent portion 92. In the case-side friction-plates-adjacent portion 91, two or more (two in this example) of the case-side friction plates 81 are adjacent to each other in the axial direction X. In the gear-side friction-plates-adjacent portion 92, two or more (two in this example) of the gear-side friction plates 82 are adjacent to each other in the axial direction X. In the differential limiting mechanism 70, one case-side friction-plates-adjacent portion 91 and one gear-side friction-plates-adjacent portion 92 are formed.

If no friction-plates-adjacent portion 90 is present, that is, if the case-side friction plates 81 and the gear-side friction plates 82 are disposed alternately one by one, the number of sliding surfaces 83 between the case-side friction plates 81 and the gear-side friction plates 82 would be seven.

When the friction-plates-adjacent portions 90 described above (including one case-side friction-plates-adjacent portion 91 in which two of the case-side friction plates 81 are adjacent to each other, and one gear-side friction-plates-adjacent portion 92 in which two of the gear-side friction plates 82 are adjacent to each other) are formed, the number of the sliding surfaces 83 between the case-side friction plates 81 and the gear-side friction plates 82 is decreased to five. When the number of the sliding surfaces 83 is decreased, the differential limiting force F becomes smaller.

When the number of the friction-plates-adjacent portions 90 themselves is increased, or when the number of the friction plates 80 of same type that constitute each friction-plates-adjacent portion 90 is increased, the number of the sliding surfaces 83 between the case-side friction plates 81 and the gear-side friction plates 82 is decreased, and consequently the differential limiting force F becomes smaller. When the number of the friction-plates-adjacent portions 90 themselves is decreased, or when the number of the friction plates 80 of same type that constitute each friction-plates-adjacent portion 90 is decreased, the number of the sliding surfaces 83 between the case-side friction plates 81 and the gear-side friction plates 82 is increased, and consequently the differential limiting force F becomes larger.

In this example, the first differential limiting mechanism 71 and the second differential limiting mechanism 72 of the differential limiting mechanism 70 have the same configuration. In both of the first differential limiting mechanism 71 and the second differential limiting mechanism 72, the friction-plates-adjacent portions 90 are formed. In the first differential limiting mechanism 71, one case-side friction-plates-adjacent portion 91 and one gear-side friction-plates-adjacent portion 92 are formed. In the second differential limiting mechanism 72, one case-side friction-plates-adjacent portion 91 and one gear-side friction-plates-adjacent portion 92 are formed.

The number of the sliding surfaces 83 between the case-side friction plates 81 and the gear-side friction plates 82 in the first differential limiting mechanism 71 and the number of the sliding surfaces 83 between the case-side friction plates 81 and the gear-side friction plates 82 in the second differential limiting mechanism 72 are equal to each other, and five each.

### (Functions and Effects)

In the rear differential device 30, when the number of the friction-plates-adjacent portions 90 themselves is increased, or when the number of the friction plates 80 of same type that constitute each friction-plates-adjacent portion 90 is increased, the number of the sliding surfaces 83 between the case-side friction plates 81 and the gear-side friction plates 82 is decreased, and consequently the differential limiting force F becomes smaller. In the rear differential device 30, when the number of the friction-plates-adjacent portions 90 themselves is decreased, or when the number of the friction plates 80 of same type that constitute each friction-plates-adjacent portion 90 is decreased, the number of the sliding surfaces 83 between the case-side friction plates 81 and the gear-side friction plates 82 is increased, and consequently the differential limiting force F becomes larger.

In this manner, in the rear differential device 30, the differential limiting force F for limiting the differential motion of the rear wheels 3 (wheels) of the vehicle 1 can be adjusted by adjusting the number of the friction-plates-adjacent portions 90 themselves or the number of the friction plates 80 of same type that constitute each friction-plates-adjacent portion 90.

As described above, it is possible to provide a rear differential device 30 capable of adjusting the differential limiting force F with a simple configuration.

By adjusting the differential limiting force F for the rear wheels 3 (wheels) of the vehicle 1 by the rear differential device 30, the balance between the stability of the vehicle 1 while traveling in a straight line and the ease of turning the vehicle 1 can be adjusted.

Since it is only necessary to change the arrangement of the case-side friction plates 81 and the gear-side friction plates 82, the number of types of components within the rear differential device 30 can be reduced.

The case-side friction-plates-adjacent portion 91 as the friction-plates-adjacent portion 90 can be easily formed by arranging a plurality of case-side friction plates 81 adjacent to each other.

The gear-side friction-plates-adjacent portion 92 as the friction-plates-adjacent portion 90 can be easily formed by arranging a plurality of gear-side friction plates 82 adjacent to each other.

In both of the first differential limiting mechanism 71 and the second differential limiting mechanism 72, the friction-plates-adjacent portions 90 are formed. The differential limiting force F can be adjusted for each of the right rear wheel 3 (wheel) corresponding to the first differential limiting mechanism 71 and the left rear wheel 3 (wheel) corresponding to the second differential limiting mechanism 72.

Each side gear 60 has the gear main body 61 that meshes with the pinion gears 52, and the pressing body 62 that holds, together with the gear main body 61, the plurality of friction plates 80 therebetween. The plurality of friction plates 80 can be easily pressed by the gear main body 61 and the pressing body 62.

The vehicle 1 is of an all-wheel drive type, and the rear differential device 30 is used for differential control of the rear wheels 3. The stability of the vehicle 1 while traveling in a straight line can be improved by adjusting the differential limiting force F for the rear wheels 3.

The vehicle 1 includes the front drive unit 10 that rotates the front wheels 2, and the rear drive unit 20 that rotates the rear wheels 3 independently of the front drive unit 10 and has the rear differential device 30. It is possible to provide the vehicle 1 with improved stability while traveling in a straight line by adjusting the differential limiting force F for the rear wheels 3.

### <Second Embodiment>

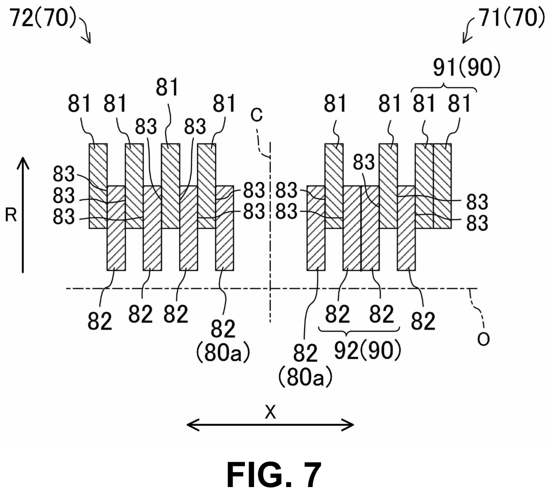

A second embodiment will be explained. In the following explanations, the same elements as those in the above-described embodiment are labeled with the same reference signs, and detailed explanations are omitted. FIG. 7 shows a conceptual diagram of the friction-plates-adjacent portions 90.

In the differential limiting mechanism 70, the first differential limiting mechanism 71 and the second differential limiting mechanism 72 have different configurations from each other.

The number of the sliding surfaces 83 between the case-side friction plates 81 and the gear-side friction plates 82 in the first differential limiting mechanism 71 and the number of the sliding surfaces 83 between the case-side friction plates 81 and the gear-side friction plates 82 in the second differential limiting mechanism 72 are different from each other.

In the first differential limiting mechanism 71, like the above-described embodiment, one case-side friction-plates-adjacent portion 91 in which two of the case-side friction plates 81 are adjacent to each other, and one gear-side friction-plates-adjacent portion 92 in which two of the gear-side friction plates 82 are adjacent to each other are formed. The number of the sliding surfaces 83 between the case-side friction plates 81 and the gear-side friction plates 82 in the first differential limiting mechanism 71 is five, the same as in the above-described embodiment.

In the second differential limiting mechanism 72, unlike the above-described embodiment, the case-side friction-plates-adjacent portion 91 and the gear-side friction-plates-adjacent portion 92 are not formed. In the second differential limiting mechanism 72, the case-side friction plates 81 and the gear-side friction plates 82 are arranged alternately one by one. The number of the sliding surfaces 83 between the case-side friction plates 81 and the gear-side friction plates 82 in the second differential limiting mechanism 72 is seven.

Other configurations are the same as in the above-described embodiments.

The differential limiting force F for the right rear wheel 3 (wheel) corresponding to the first differential limiting mechanism 71 and the differential limiting force F for the left rear wheel 3 (wheel) corresponding to the second differential limiting mechanism 72 can be different from each other.

### <Third Embodiment>

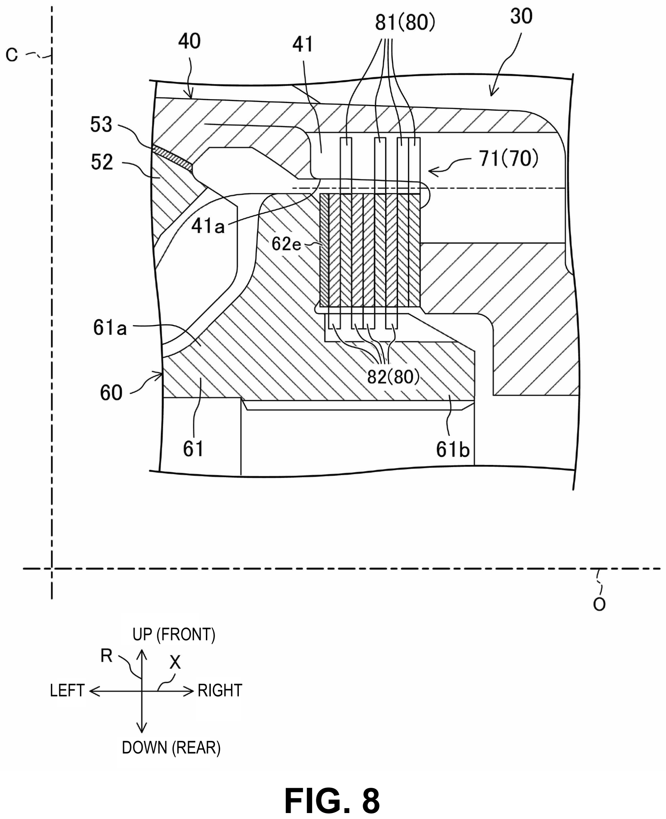

A third embodiment will be explained. In the following explanations, the same elements as those in the above-described embodiments are labeled with the same reference signs, and detailed explanations are omitted. FIG. 8 shows the rear differential device.

Each side gear 60 has the gear main body 61. Each side gear 60 does not have the pressing body 62. The plurality of friction plates 80 are held between the gear part 61a of the gear main body 61 and the wall of the differential case 40, and are pressed in the axial direction X. The gear-side friction plates 82 are mounted on the outer circumferential surface of the cylindrical part 61b of the gear main body 61 of the side gear 60. Specifically, the protrusions 82b of the gear-side friction plate 82 are fitted in grooves (extending in the axial direction X and disposed side by side around the rotation axis O) on the outer circumferential surface of the cylindrical part 61b of the gear main body 61.

Other configurations are the same as in the above-described embodiments.

### <Other Embodiments>

The present disclosure has been described with the preferred embodiments, but such descriptions are not limitations, and various modifications, substitutions, or combinations are possible, of course.

In the differential limiting mechanism 70, only one of the case-side friction-plates-adjacent portion 91 and the gear-side friction-plates-adjacent portion 92 may be formed.

With the friction-plates-adjacent portions 90 formed in both of the first differential limiting mechanism 71 and the second differential limiting mechanism 72, the number of the friction plates 80 of same type that constitute the friction-plates-adjacent portion 90 in the first differential limiting mechanism 71 and the number of the friction plates 80 of same type that constitute the friction-plates-adjacent portion 90 in the second differential limiting mechanism 72 may be made different from each other, or the number of the friction-plates-adjacent portions 90 in the first differential limiting mechanism 71 and the number of the friction-plates-adjacent portions 90 in the second differential limiting mechanism 72 may be made different from each other.

The differential limiting mechanism 70 may be provided only on one side or the other side of the pinion gears 52 in the axial direction X.

In the above-described embodiments, the differential limiting mechanism 70 is provided only in the rear differential device 30, but this is not a limitation; the differential limiting mechanism 70 may be provided in both the rear differential device 30 and the front differential device 13, or may be provided only in the front differential device 13.

Comb teeth may be used instead of the grooves for holding the friction plates 80. The friction plates 80 may have a configuration different from the grooves and comb teeth, and may be mounted in the differential case 40 or the side gears 60.

In the above-described embodiments, the rear differential device 30 having the differential limiting mechanism 70 is used for differential control of the left and right rear wheels 3 (wheels) of the vehicle 1, but this is not a limitation. The front differential device 13 having the differential limiting mechanism 70 may be used for differential control of the left and right front wheels 2 (wheels) of the vehicle 1.

The vehicle 1 may be of a rear-wheel drive type, in which the rear wheels 3 are driven to rotate. The vehicle 1 may be of a front-wheel drive type, in which the front wheels 2 are driven to drive. In these cases, the rear differential device 30 and the front differential device 13 may be connected by a propeller shaft.

The vehicle 1 may be driven by an engine. In this case, the differential case 40 is rotated by receiving the driving force of the engine, which is a drive source.

### [Industrial Applicability]

Since the present disclosure is applied to a vehicle differential device and a vehicle, it is very useful and has high industrial applicability.

### [Reference Signs List]

- O: rotation axis
- X: axial direction
- F: differential limiting force
- 1: vehicle
- 2: front wheel
- 3: rear wheel (wheel)
- 10: front drive unit
- 20: rear drive unit
- 21: rear drive motor (drive source)
- 30: rear differential device (vehicle differential device)
- 40: differential case
- 52: pinion gear
- 60: side gear
- 61: gear main body
- 62: pressing body
- 70: differential limiting mechanism
- 71: first differential limiting mechanism
- 72: second differential limiting mechanism
- 80: friction plate
- 81: case-side friction plate
- 82: gear-side friction plate
- 83: sliding surface
- 90: friction-plates-adjacent portion
- 91: case-side friction-plates-adjacent portion
- 92: gear-side friction-plates-adjacent portion

## Claims

1. A vehicle differential device to be mounted on a vehicle (1), the vehicle differential device comprising:
a differential case (40) that is rotated by receiving a driving force of a drive source (21);
a pair of side gears (60) that are disposed in the differential case (40) and coaxial with a rotation axis (O)of the differential case (40);
a pinion gear (52) that is disposed in the differential case (40) and meshes with both of the pair of side gears (60); and
a differential limiting mechanism (70) that generates a differential limiting force (F) for limiting differential motion of wheels (2,3) of the vehicle (1),
wherein
the differential limiting mechanism (70) has a plurality of friction plates (80) that are pressed by each of the side gears (60) in an axial direction (X) in which the rotation axis (O) extends,
some of the plurality of friction plates (80) are a plurality of case-side friction plates (81) provided in the differential case (40),
others of the plurality of friction plates (80) are a plurality of gear-side friction plates (82) provided in the side gear (60),
the case-side friction plates (81) and the gear-side friction plates (82) are arranged side by side in the axial direction (X) and slide relative to each other to generate the differential limiting force (F),
**characterized in that**
in the differential limiting mechanism (70), a friction-plates-adjacent portion (90) is formed in which among at least either type of the case-side friction plates (81) and the gear-side friction plates (82), two or more of the friction plates of the same type are adjacent to each other.

2. The vehicle differential device according to claim 1, wherein the friction-plates-adjacent portion (90) includes a case-side friction-plates-adjacent portion (91) in which two or more of the case-side friction plates (81) are adjacent to each other.

3. The vehicle differential device according to claim 1 or 2, wherein the friction-plates-adjacent portion (90) includes a gear-side friction-plates-adjacent portion (92) in which two or more of the gear-side friction plates (82) are adjacent to each other.

4. The vehicle differential device according to any one of claims 1 to 3, wherein
except for the friction-plates-adjacent portion (90), the case-side friction plates (81) and the gear-side friction plates are alternately arranged in the axial direction (X).

5. The vehicle differential device according to any one of claims 1 to 4, wherein
the differential limiting mechanism (70) includes a first differential limiting mechanism (71) provided on one side of the pinion gear (52) in the axial direction (X), and a second differential limiting mechanism (72) provided on another side of the pinion gear (52) in the axial direction (X), and
the friction-plates-adjacent portion(90) is formed in both of the first differential limiting mechanism (71) and the second differential limiting mechanism (72).

6. The vehicle differential device according to any one of claims 1 to 5, wherein
the differential limiting mechanism (70) includes a first differential limiting mechanism (71) provided on one side of the pinion gear (52) in the axial direction(X), and a second differential limiting mechanism (72) provided on another side of the pinion gear (52) in the axial direction (X), and
the number of sliding surfaces (83) between the case-side friction plates (81) and the gear-side friction plates (82) in the first differential limiting mechanism (71) and the number of sliding surfaces (83) between the case-side friction plates (81) and the gear-side friction plates (82) in the second differential limiting mechanism (72) are different from each other.

7. The vehicle differential device according to any one of claims 1 to 6, wherein
each of the side gears (60) has a gear main body (61) that meshes with the pinion gear (52), and a pressing body (62) that holds, together with the gear main body (61), the plurality of friction plates (80) therebetween,
the gear main body (61) and the pressing body (62) are engaged with each other, and
the gear-side friction plates (82) are mounted to the pressing body (62).

8. The vehicle differential device according to claim 7, wherein
among the plurality of friction plates (80) one specific friction plate has a greater thickness than the other friction plates (80) and is in contact with the gear main body (61) and with a disc spring (62e).

9. The vehicle differential device according to claim 8, wherein
the disc spring (62e) is disposed between the pressing body (62) and the gear main body (61) of the side gear (60) and presses the friction plates (80) in the axial direction (X).

10. A vehicle comprising the vehicle differential device according to any one claims 1 to 9.

11. The vehicle of claim 10, the vehicle comprising:
a front drive unit (10) that rotates front wheels (2); and
a rear drive unit (20) that rotates rear wheels (3) independently of the front drive unit (10), and has the vehicle differential device.

12. The vehicle (1) according to claim 10, wherein
the vehicle (1) is of a rear-wheel drive type or an all-wheel drive type, and
the vehicle differential device is used for differential control of rear wheels (3) of the vehicle (1).

13. The vehicle (1) according to any one of claims 10 to 12, wherein
the vehicle (1) is an electric vehicle.
